# EUROPÄISCHE PATENTSCHRIFT

(11) **EP 3 363 752 B1**
(45) Veröffentlichungstag und Bekanntmachung des Hinweises auf die Patenterteilung: **17.08.2022**
(21) Anmeldenummer: 17156414.9
(22) Anmeldetag: 16.02.2017
(51) Int. Cl.: B65G 59/10, B65B 43/44

(54) **ENTSTAPELVORRICHTUNG MIT ROTIERENDER SCHALENENTLASTUNG**
SEPARATING DEVICE PROVIDED WITH ROTARY TRAY RELIEF
DISPOSITIF DE DÉSEMPILAGE COMPRENANT UNE DÉCHARGE DE PLATEAU ROTATIVE

(43) Veröffentlichungstag der Anmeldung: 22.08.2018
(73) Patentinhaber: MULTIVAC Sepp Haggenmüller SE & Co. KG, 87787 Wolfertschwenden (DE)
(72) Erfinder: Fickler, Bernhard, 87749 Hawangen (DE)
(74) Vertreter: Grünecker Patent- und Rechtsanwälte PartG mbB

(56) Entgegenhaltungen:
- EP-A1- 2 186 760
- EP-A1- 3 023 370
- EP-A1- 3 055 238
- WO-A1-2009/150755
- CN-A- 105 460 626
- US-A- 3 454 987

## Beschreibung

Die Erfindung bezieht sich auf eine Entstapelvorrichtung zum Entstapeln von einzelnen Schalen mit einer rotierenden Trayentlastung gemäß dem Anspruch 1.

Aus der WO 2015/028022 A1 ist eine Entstapelvorrichtung nach dem Oberbegriff des Anspruchs 1 bekannt, bei der eine Taumelscheibe derart und zusammen mit einer Entstaplerschraube auf einer rotierenden Achse angeordnet ist, dass bei einer Drehung von 360° die Taumelscheibe in einen Traystapel oberhalb der Entstaplerschraube zwischen zwei übereinander benachbarten Schalen, auch Trays genannt, bzw. deren Schalenränder eintaucht und die an der Oberseite der Taumelscheibe aufliegende Schale zusammen mit dem darüber befindlichen Stapel von Schalen anhebt. So wird die Belastung auf die unterste, zu entstapelnde Schale auf ein konstantes Minimum reduziert. Aufgrund von unterschiedlichen Stapelhöhen entstehen auf die im Bereich der Taumelscheibe befindlichen Schalen unterschiedliche Belastungen, welche zu unterschiedlichen vertikalen Abständen zwischen zwei benachbarten und ineinander liegenden Schalen führen können. Da kann es vorkommen, dass die im Stand der Technik offenbarten Taumelscheiben, die jeweils an den Ecken oder an gegenüberliegenden Seiten der Schalen vorgesehen sind, nicht eine einzige gemeinsame Schale anheben, sondern zwei übereinander befindliche Schalen einseitig oder zumindest nicht allseitig anheben und somit nicht die gesamte Last des Traystapels aufgenommen wird.

Die US 3,454,987 A, WO 2009/150755 A1, CN 105460626 A und EP 3 023 370 A1 offenbaren jeweils Entstapelvorrichtungen zum Entstapeln von in einem Stapel zusammengefügter Behälter, beispielsweise in Form von Schalen oder Bechern.

Aufgabe der Erfindung ist es, eine verbesserte Ausführungsform einer Trayentlastung bereitzustellen.

Diese Aufgabe wird gelöst durch eine Entstapelvorrichtung mit den Merkmalen des Anspruchs 1. Vorteilhafte Weiterbildungen der Erfindung sind in den Unteransprüchen angegeben.

Die erfindungsgemäße Entstapelvorrichtung zum Entstapeln von Schalen umfasst Vertikalführungen zum Aufnehmen eines Stapels mit einer Vielzahl von Schalen, eine Trennvorrichtung zum Abstapeln von einzelnen Schalen nach unten und eine Schalenentlastungsvorrichtung, die mehrere rotierende Anhebeelemente aufweist. Die erfindungsgemäße Entstapelvorrichtung zeichnet sich dadurch aus, dass die Anhebeelemente im Wesentlichen zylindrisch ausgebildet sind und eine Kammstruktur mit wenigstens zwei im Wesentlichen in Umfangsrichtung der Anhebeelemente zueinander parallel verlaufenden Eintauchvorsprünge aufweisen. Dies bringt den Vorteil mit sich, z.B. auch Menüschalen verarbeiten zu können, die derart ineinander gestapelt sind, dass die Schalen lediglich an der äußersten Kante angehoben werden können und die Eintauchtiefe in den Stapel weniger als 2 mm betragen kann. Solche Menüschalen können auch eine geringe Stabilität am Schalenrand aufweisen, so dass ein Umknicken und damit ein Durchrutschen am Anhebeelement nicht ausgeschlossen werden kann. Durch das gleichzeitige Aufnehmen mehrerer Schalen des Stapels mittels mehrerer Eintauchvorsprünge wird ein Durchrutschen des Stapels trotz der sehr geringen Eintauchtiefe verhindert, da eine Lastverteilung des Stapels auf mehrere Eintauchvorsprünge der Kammstruktur vorliegt.

Bevorzugt weisen die Kammstrukturen der Anhebeelemente wenigstens vier zueinander parallel verlaufende Eintauchvorsprünge auf, um die Gewichtsverteilung des Stapels verbessert zu verteilen.

Vorzugsweise weisen zwei benachbarte Eintauchvorsprünge einen Abstand von 2 mm bis 4 mm auf, um auch einen Stapel mit ineinander liegenden Schalen, deren Schalenränder die Oberseite einer unterhalb befindlichen Schale überlappen, verarbeiten bzw. anheben zu können.

Dabei weisen die Eintauchvorsprünge in einer besonders vorteilhaften Ausführung einen gleichen Abstand zueinander auf; so ist sowohl eine Gewichtsverteilung auf wenigstens zwei Eintauchvorsprünge als auch eine Verarbeitung von Standardschalen mit größeren Abständen der Schalen zueinander und tiefer eintauchenden Eintauchvorsprüngen ermöglicht.

In einer besonders vorteilhaften Ausführung weisen die Eintauchvorsprünge einen schraubenförmig ansteigenden und einen horizontal verlaufenden sowie optional einen abfallenden Bereich auf, um sowohl den Stapel sanft anzuheben als auch sanft in die Ursprungslage abzusenken, womit ein besonders ruhiger Arbeitsablauf gewährleistet werden kann.

Die Eintauchvorsprünge erstrecken sich in umlaufender Richtung vorzugsweise über einen Bereich von weniger als 315°, bevorzugt weniger als 270°, um den Eintauchvorsprung aus dem Stapel herauszuführen, damit der Stapel nach unten nachgeführt werden kann.

Die Erfindung sieht vor, dass der Stapel bei einer Drehung des Anhebeelements um 360° temporär um wenigstens 3 mm angehoben wird.

Im Folgenden wird ein vorteilhaftes Ausführungsbeispiel der Erfindung anhand von Zeichnungen näher dargestellt. Im Einzelnen zeigen:
Fig. 1 eine Entstapelvorrichtung und eine Transporteinheit,
Fig. 2 eine vergrößerte Ansicht einer Schalenentlastungsvorrichtung,
Fig. 3 eine Seitenansicht der Schalenentlastungsvorrichtung in einer ersten Phase,
Fig. 4 eine Seitenansicht der Schalenentlastungsvorrichtung in einer zweiten Phase,
Fig. 5 eine Seitenansicht der Schalenentlastungsvorrichtung in einer dritten Phase und
Fig. 6 eine Seitenansicht der Schalenentlastungsvorrichtung in einer vierten Phase.

Gleiche Komponenten sind in den Figuren durchgängig mit gleichen Bezugszeichen versehen worden.

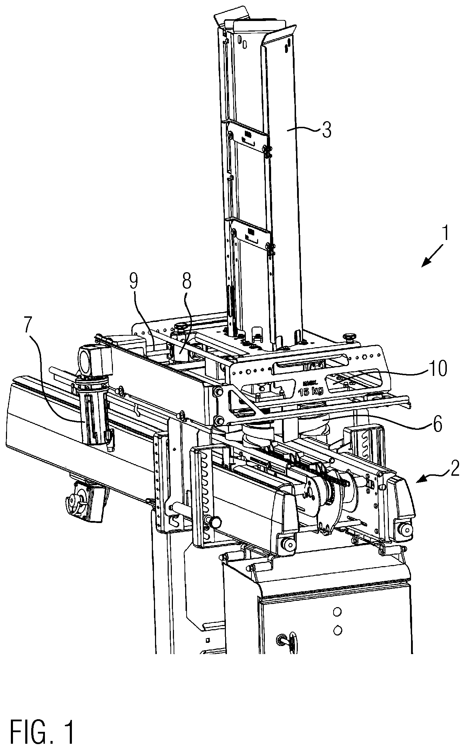

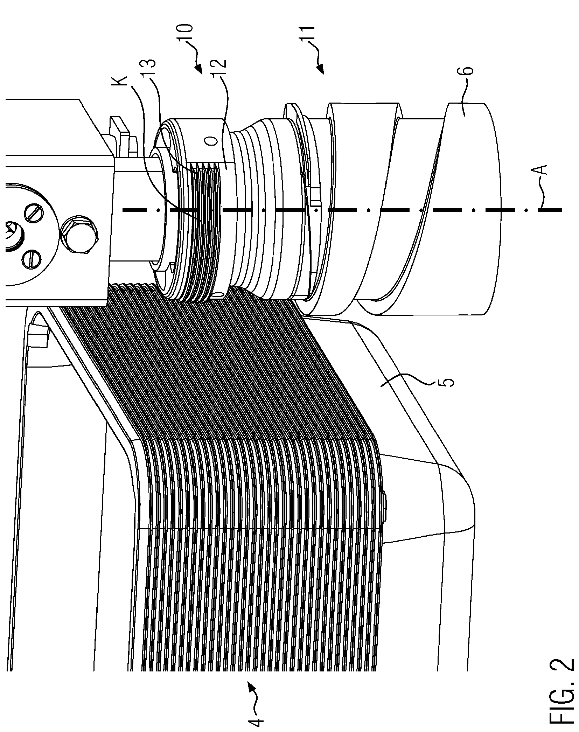

Figur 1 zeigt eine erfindungsgemäße Entstapelvorrichtung 1, die konfiguriert ist, um Schalen einzeln auf eine Transporteinheit 2 fallen zu lassen, um die Schalen, auch als Trays bezeichnet, anschließend einer Füllstation oder Einlegestation einer Verpackungsmaschine zuzuführen. Die Entstapelvorrichtung 1 weist Vertikalführungen 3 auf, um einen in Fig. 2 näher gezeigten Stapel 4 von Schalen 5 aufzunehmen. Vier Entstaplerschrauben 6 werden von einem gemeinsamen Motor 7, vorzugsweise von einem Servomotor, angetrieben. Jeweils zwei Entstaplerschrauben 6 sind mittels jeweils eines Getriebes 8 für jede Entstaplerschraube 6 auf einer gemeinsamen, nicht näher beschriebenen Getriebewelle angebracht und entlang dieser Getriebewelle verschiebbar, um an unterschiedliche Schalengrößen anpassbar zu sein. Auf jeder der vier Achsen der Entstaplerschrauben 6 ist eine Schalenentlastungsvorrichtung 10, siehe Fig. 2, vorgesehen, um den Stapel 4 zu halten bzw. anzuheben und somit die Kraft des Stapels 4 auf die Entstaplerschrauben 6 bzw. die unterste Schale 5 zu reduzieren.

Figur 2 zeigt eine vergrößerte Ansicht einer Trennvorrichtung 11 zum Abstapeln einzelner Schalen 5 vom Stapel 4. Die Trennvorrichtung 11 weist hierfür die Entstaplerschraube 6 mit Drehachse A auf. Oberhalb der Trennvorrichtung 11 ist die Schalenentlastungsvorrichtung 10 auf der gemeinsamen Achse A vorgesehen. Die Schalenentlastungsvorrichtung 10 weist ein um die Achse A und gemeinsam bzw. synchron mit der Entstaplerschraube 6 rotierendes Anhebeelement 12 auf. Das Anhebeelement 12 weist eine im Wesentlichen zylindrische Form auf. An seiner Außenseite ist eine Kammstruktur K mit fünf parallel zueinander verlaufenden Eintauchvorsprüngen 13 vorgesehen, die sich über einen Bereich von ca. 270° entlang des Umgangs des Anhebeelements 12 erstrecken. Dabei verlaufen die Eintauchvorsprünge 13 in einem Bereich 14 in axialer Richtung allmählich schraubenförmig ansteigend und anschließend in einem Bereich 16 horizontal. Denkbar ist auch ein ansteigender Bereich 14 und ein später folgender abfallender Bereich. Der ansteigende Bereich 14 dient zum Anheben des Stapels 4 und der optionale abfallende Bereich zum sanften Absetzen des Stapels 4 auf den obersten Eintauchvorsprung 13 der Entstaplerschrauben 6. In den folgenden Figuren werden verschiedene Phasen, die innerhalb einer Drehung des Anhebeelements 12 auftreten, näher erläutert.

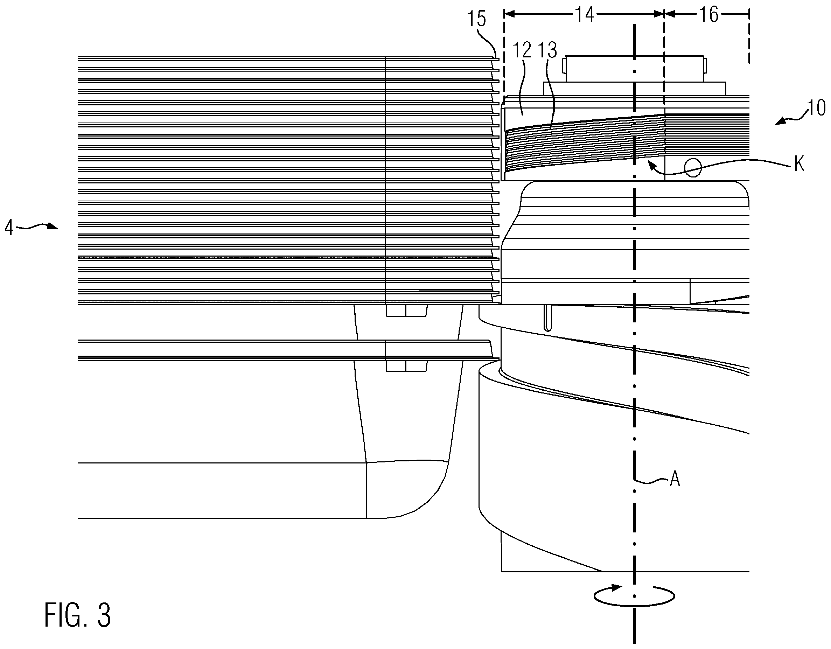

Figur 3 zeigt eine Seitenansicht der Schalenentlastungsvorrichtung 10 in einer ersten Phase, bei der das Anhebelement 12 sich in Pfeilrichtung bzw. im Uhrzeigersinn zu drehen beginnt. Die Eintauchvorsprünge 13 der Kammstruktur K sind zu Beginn des ansteigenden Bereichs 14 radial noch von den Schalenrändern 15 vorzugsweise um 0,1 bis 1,0 mm entfernt. Die Eintauchvorsprünge 13 selbst weisen jeweils einen bevorzugten vertikalen Abstand von 2 bis 4 mm zueinander auf, um auch eng aufeinander- und ineinander liegende Schalen 15 an deren Schalenrändern 15 einzeln aufnehmen zu können.

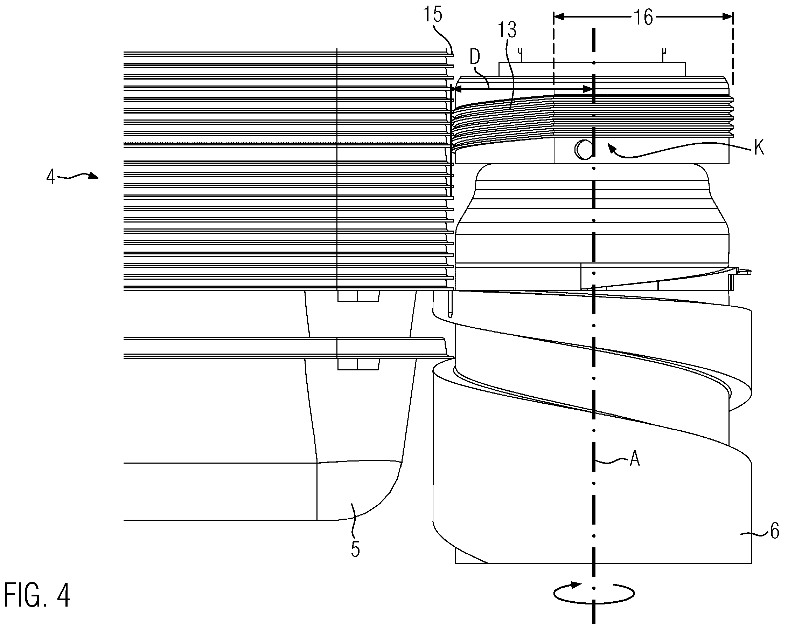

Figur 4 zeigt eine zweite Phase, bei der die rotierenden Eintauchvorsprünge 13 derart in den Stapel 4 eintauchen, indem die Höhe der Eintauchvorsprünge 13, d. h. ihre radialen Abstände D von der Achse A zunehmen und dabei die Schalen 5 bzw. deren Schalenränder 15 wenigstens teilweise auseinanderdrücken oder auch nur anheben. Eine bereits zuvor durch die Entstaplerschraube 6 vom Stapel 4 abgelöste, unterste Schale 5 wird hingegen nach unten gefördert.

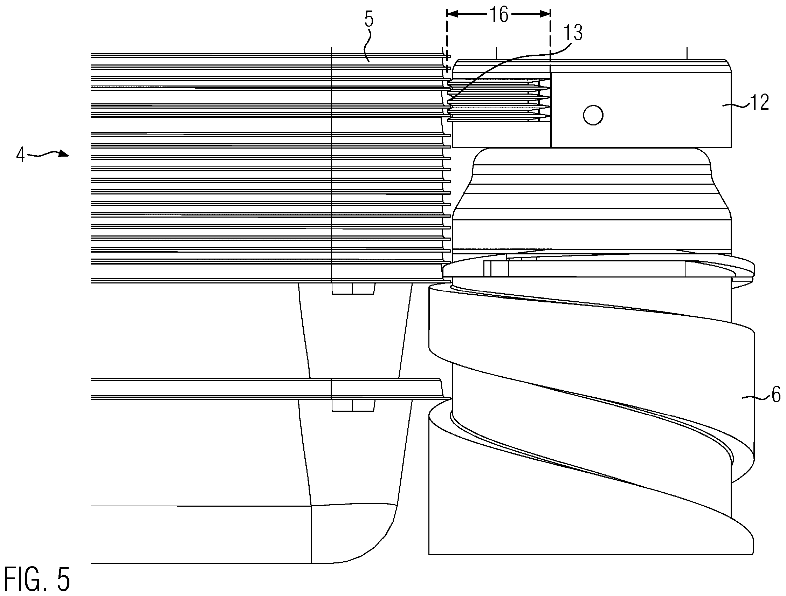

In der weiteren rotativen Bewegung des Anhebeelements 12 werden, wie in Figur 5 in einer dritten Phase gezeigt, der Stapel 4 bzw. die von den Eintauchvorsprüngen 13 erfassten Schalen 5 weiter angehoben und somit die Last des Stapels 4 von den zwischen der Schalenentlastungsvorrichtung 10 und der Entstaplerschraube 6 befindlichen Anzahl von Schalen 5 reduziert bzw. komplett abgenommen. Dies minimiert bzw. begrenzt die Last bzw. Gewichtskraft auf die unterste Schale 5 vor oder beim Entstapeln durch die Entstaplerschraube 6. Je nach Abstand der Schalen 5 im Stapel 4 zueinander tragen alle Eintauchvorsprünge 13 je eine Schale 5 oder es kann auch eine Lücke entstehen und nicht alle Eintauchvorsprünge 13 heben eine Schale 5 an. Wenigstens zwei Schalen 5 sollten von Eintauchvorsprüngen 13 erfasst werden und das Anheben des Stapels 4 bewirken, um die Belastung der Schalen 5 auf die Eintauchvorsprünge 13 zu verteilen, um so ein Durchrutschen des Stapels 4 vor allem bei einer geringen Eintauchtiefe von 1 bis 3 mm der Eintauchvorsprünge 13 in den Stapel 4 bzw. unter die Schalenränder 15 zu verhindern. Der entgegen der Drehrichtung folgende Bereich 16 der Eintauchvorsprünge 13 ist horizontal ausgebildet bei vertikal ausgerichteter Achse A, um den Stapel 4 in der angehobenen Position zu halten.

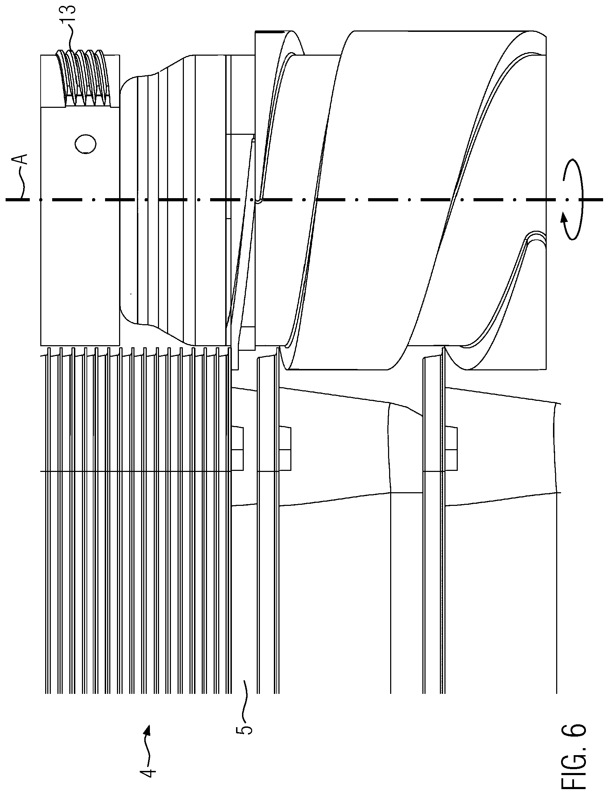

In der Figur 6 ist gezeigt, wie in der vierten und letzten Phase vor Beendigung einer kompletten 360° Drehung die Eintauchvorsprünge 13 wiederum ihren radialen Abstand zur Achse A verringern und aus dem Stapel 4 austauchen, so dass der angehobene Stapel 4 nach unten auf die darunterliegenden Schalen 5 nachrutscht, bevor der zuvor beschriebene Ablauf wieder von neuem beginnt. Um das Absetzen möglichst sanft gestalten zu können, kann auf den horizontalen Bereich 16, siehe Figur 5, ein nicht näher gezeigter abfallender Bereich folgen. Dabei wird der horizontale Bereich 16 verkürzt.

Die Entstaplerschrauben 6 mit den auf der gemeinsamen Achse A angeordneten Anhebelementen 12 können jeweils in der Nähe der vier Ecken des Stapels 4 vorgesehen sein. Dabei können sie beispielsweise verteilt auf vier Seiten oder an zwei gegenüberliegenden Seiten eines rechteckigen Stapels 4 angeordnet sein.

## Patentansprüche

1. Entstapelvorrichtung (1) zum Entstapeln von Schalen (5), umfassend Vertikalführungen (3) zum Aufnehmen eines Stapels (4) mit einer Vielzahl von Schalen (5), eine Trennvorrichtung (11) zum Abstapeln von einzelnen Schalen (5) nach unten und eine Schalenentlastungsvorrichtung (10), **dadurch gekennziechnet, dass** die Schalenentlastungsvorrichtung (10) mehrere jeweils um eine Achse (A) rotierende Anhebeelemente (12) aufweist, die im Wesentlichen zylindrisch ausgebildet sind und jeweils auf ihrer Außenseite eine Kammstruktur (K) mit wenigstens zwei zueinander parallel verlaufenden Eintauchvorsprüngen (13) aufweisen.

2. Entstapelvorrichtung nach Anspruch 1, **dadurch gekennzeichnet, dass** die Anhebeelemente (12) wenigstens vier oder fünf zueinander parallel verlaufende Eintauchvorsprünge (13) aufweisen.

3. Entstapelvorrichtung nach einem der vorangehenden Ansprüche, **dadurch gekennzeichnet, dass** zwei benachbarte Eintauchvorsprünge (13) einen Abstand von 2 bis 4 mm aufweisen.

4. Entstapelvorrichtung nach einem der vorangehenden Ansprüche, **dadurch gekennzeichnet, dass** die Eintauchvorsprünge (13) einen gleichen Abstand zueinander aufweisen.

5. Entstapelvorrichtung nach einem der vorangehenden Ansprüche, **dadurch gekennzeichnet, dass** sich die Eintauchvorsprünge (13) in umlaufender Richtung über einen Bereich von weniger als 270° der Anhebeelemente (12) erstrecken.

6. Entstapelvorrichtung nach einem der vorangehenden Ansprüche, **dadurch gekennzeichnet, dass** die Eintauchvorsprünge (13) einen schraubenförmig ansteigenden Bereich (14) und einen horizontalen Bereich (16) aufweisen, optional gefolgt von einem abfallenden Bereich.

7. Entstapelvorrichtung nach einem der vorangehenden Ansprüche, **dadurch gekennzeichnet, dass** die Eintauchvorsprünge (13) über ihren Verlauf einen variierenden radialen Abstand (D) von der Achse (A) aufweisen.

8. Entstapelvorrichtung nach wenigstens den Ansprüchen 6 und 7, **dadurch gekennzeichnet, dass** der radiale Abstand (D) eines Eintauchvorsprungs (13) von der Achse (A) im Verlauf seines ansteigenden Bereichs (14) zunimmt und im Verlauf seines horizontalen Bereichs (16) zumindest weitgehend konstant bleibt.

## Claims

1. Dispensing device (1) for dispensing of trays (5), comprising vertical guidings (3) for receiving a stack (4) with a plurality of trays (5), a separating device (11) for dispensing individual trays (5) in a downward direction and a tray discharge device (10), **characterized in that** the tray discharge device (10) has several lifting elements (12) that rotate each around an axis (A), the lifting elements (12) are essentially formed in a cylindrical way and have, respectively on their outer side, a comb structure (K) with at least two immersing protrusions (13) that extend in parallel to one another.

2. Dispensing device according to Claim 1, **characterized in that** the lifting elements (12) have at least four or five immersing protrusions (13) that extend in parallel to one another.

3. Dispensing device according to one of the preceding claims, **characterized in that** two adjacent immersing protrusions (13) have a distance of 2 to 4mm.

4. Dispensing device according to one of the preceding claims, **characterized in that** the immersing protrusions (13) have an identical distance to one another.

5. Dispensing device according to one of the preceding claims, **characterized in that** the immersing protrusions (13) extend in the circulating direction over less than 270° of the lifting elements (12).

6. Dispensing device according to one of the preceding claims, **characterized in that** the immersing protrusions (13) have a portion (14) that ascends in a screw-shaped way and a horizontal portion (16), optionally followed by a descending portion.

7. Dispensing device according to one of the preceding claims, **characterized in that** the immersing protrusions (13) have a varying radial distance (D) from the axis (A) over their course.

8. Dispensing device according to at least the Claims 6 and 7, **characterized in that** the radial distance (D) of an immersing protrusion (13) increases from the axis (A) in the course of its ascending portion (14) and remains at least substantially constant in the course of its horizontal portion (16).

## Revendications

1. Dispositif de désempilage (1) permettant de désempiler des barquettes (5), comprenant des guides verticaux (3) permettant d'accueillir une pile (4) comprenant une pluralité de barquettes (5), un dispositif de séparation (11) permettant de désempiler des barquettes (5) individuelles vers le bas et un dispositif de déchargement de barquettes (10), **caractérisé en ce que** le dispositif de déchargement de barquettes (10) présente plusieurs éléments de levage (12) tournant respectivement autour d'un axe (A), réalisés de manière essentiellement cylindrique et présentant respectivement sur leur côté extérieur une structure en peigne (K) comprenant au moins deux saillies de pénétration (13) s'étendant parallèlement l'une à l'autre.

2. Dispositif de désempilage selon la revendication 1, **caractérisé en ce que** les éléments de levage (12) présentent au moins quatre ou cinq saillies de pénétration (13) s'étendant parallèlement les unes aux autres.

3. Dispositif de désempilage selon l'une quelconque des revendications précédentes, **caractérisé en ce que** deux saillies de pénétration (13) adjacentes présentent un espacement compris entre 2 et 4 mm.

4. Dispositif de désempilage selon l'une quelconque des revendications précédentes, **caractérisé en ce que** les saillies de pénétration (13) présentent entre elles un espacement égal.

5. Dispositif de désempilage selon l'une quelconque des revendications précédentes, **caractérisé en ce que** les saillies de pénétration (13) s'étendent dans la direction circonférentielle sur un secteur inférieur à 270° des éléments de levage (12).

6. Dispositif de désempilage selon l'une quelconque des revendications précédentes, **caractérisé en ce que** les saillies de pénétration (13) présentent un secteur hélicoïdal ascendant (14) et un secteur horizontal (16), éventuellement suivis d'un secteur descendant.

7. Dispositif de désempilage selon l'une quelconque des revendications précédentes, **caractérisé en ce que** les saillies de pénétration (13) présentent sur leur tracé une distance radiale (D) variable par rapport à l'axe (A).

8. Dispositif de désempilage selon au moins les revendications 6 et 7, **caractérisé en ce que** la distance radiale (D) d'une saillie de pénétration (13) par rapport à l'axe (A) augmente sur le tracé de son secteur ascendant (14) et reste au moins essentiellement constante sur le tracé de son secteur horizontal (16).
